# EUROPEAN PATENT APPLICATION

(11) **EP 4 462 711 A1**
(43) Date of publication of application: **13.11.2024**
(21) Application number: 23737090.3
(22) Date of filing: 05.01.2023
(51) Int. Cl.: H04L 5/00

(54) **TCI STATE UPDATING METHOD AND APPARATUS, COMMUNICATION DEVICE, SYSTEM AND STORAGE MEDIUM**

(30) Priority: 07.01.2022 CN 202210016552
(71) Applicant: VIVO MOBILE COMMUNICATION CO., LTD., Dongguan, Guangdong 523863 (CN)
(72) Inventor: SUN, Yanliang, Dongguan, Guangdong 523863 (CN); SUN, Peng, Dongguan, Guangdong 523863 (CN); YANG, Yu, Dongguan, Guangdong 523863 (CN)
(74) Representative: Murgitroyd & Company
(86) International application number: PCT/CN2023/070650
(87) International publication number: WO 2023/131228

(57) **Abstract**

This application pertains to the field of communication technologies, and discloses a TCI state updating method and apparatus, a communication device, a system, and a storage medium. The TCI state updating method in embodiments of this application includes: obtaining, by UE, target indication information; and updating a first TCI state list based on the target indication information, where an updated first TCI state list takes effect after a first slot, and the first slot is determined based on duration required by an updating process of the first TCI state list.

## Description

### CROSS-REFERENCE TO RELATED APPLICATION

This application claims priority to Chinese Patent Application No. 202210016552.6, filed in China on January 7, 2022, which is incorporated herein by reference in its entirety.

### TECHNICAL FIELD

This application pertains to the field of communication technologies, and specifically relates to a TCI state updating method and apparatus, a communication device, a system, and a storage medium.

### BACKGROUND

A network-side device may send a transmission configuration indicator (Transmission Configuration Indicator, TCI) to user equipment (User Equipment, UE) to schedule the UE to perform uplink/downlink data transmission. With respect to an effective time of the TCI, for example, in a separate TCI scenario or a joint TCI scenario, the network-side device and the UE side need to keep the effective time of the TCI consistent to ensure performance of the uplink/downlink data transmission when the network-side device schedules the UE. However, an urgent problem to be resolved is how the UE determines the effective time of the TCI.

### SUMMARY

Embodiments of this application provide a TCI state updating method and apparatus, a communication device, a system, and a storage medium to resolve a problem of how UE determines an effective time of a TCI.

According to a first aspect, a TCI state updating method is provided. The method includes: obtaining, by UE, target indication information; and updating a first TCI state list based on the target indication information, where an updated first TCI state list takes effect after a first slot, and the first slot is determined based on duration required by an updating process of the first TCI state list.

According to a second aspect, a TCI state updating apparatus is provided. The apparatus includes an obtaining module and an updating module. The obtaining module is configured to obtain target indication information. The updating module is configured to update a first TCI state list based on the target indication information obtained by the obtaining module, where an updated first TCI state list takes effect after a first slot, and the first slot is determined based on duration required by an updating process of the first TCI state list.

According to a third aspect, a TCI state updating method is provided. The method includes: sending, by a network-side device, target indication information to UE, where the target indication information is used by the UE to update a first TCI state list, the updated first TCI state list takes effect after a first slot, and the first slot is determined based on duration required by an updating process of the first TCI state list.

According to a fourth aspect, a TCI state updating apparatus is provided. The apparatus includes a sending module. The sending module is configured to send target indication information to UE, where the target indication information is used by the UE to update a first TCI state list, the updated first TCI state list takes effect after a first slot, and the first slot is determined based on duration required by an updating process of the first TCI state list.

According to a fifth aspect, UE is provided. The UE includes a processor and a memory. The memory stores a program or instructions executable on the processor. When the program or instructions are executed by the processor, the steps of the method according to the first aspect are implemented.

According to a sixth aspect, UE is provided. The UE includes a processor and a communication interface. The processor is configured to obtain, by the UE, target indication information; and update a first TCI state list based on the target indication information, where an updated first TCI state list takes effect after a first slot, and the first slot is determined based on duration required by an updating process of the first TCI state list.

According to a seventh aspect, a network-side device is provided. The network-side device includes a processor and a memory. The memory stores a program or instructions executable on the processor. When the program or instructions are executed by the processor, the steps of the method according to the third aspect are implemented.

According to an eighth aspect, a network-side device is provided. The network-side device includes a processor and a communication interface. The communication interface is configured to send target indication information to UE, where the target indication information is used by the UE to update a first TCI state list, the updated first TCI state list takes effect after a first slot, and the first slot is determined based on duration required by an updating process of the first TCI state list.

According to a ninth aspect, a communication system is provided and includes UE and a network-side device. The UE may be configured to perform the steps of the TCI state updating method according to the first aspect. The network-side device may be configured to perform the steps of the TCI state updating method according to the third aspect.

According to a tenth aspect, a readable storage medium is provided. The readable storage medium stores a program or instructions. When the program or instructions are executed by a processor, the steps of the method according to the first aspect are implemented, or the steps of the method according to the third aspect are implemented.

According to an eleventh aspect, a chip is provided. The chip includes a processor and a communication interface. The communication interface is coupled to the processor. The processor is configured to run a program or instructions to implement the method according to the first aspect or implement the method according to the third aspect.

According to a twelfth aspect, a computer program or program product is provided. The computer program or program product is stored in a storage medium. The computer program or program product is executed by at least one processor to implement the steps of the TCI state updating method according to the first aspect or implement the steps of the TCI state updating method according to the third aspect.

In the embodiments of this application, the UE may update the first TCI state list based on the target indication information, where the updated first TCI state list takes effect after the first slot, and the first slot is determined based on the duration required by the updating process of the first TCI state list. In this solution, after updating the first TCI state list, the UE may determine an effective time of the updated first TCI state list based on the duration required by the updating process of the first TCI state list, that is, the effective time of the TCI can be flexibly determined based on the duration required by the updating process of the first TCI state list, so that the network-side device schedules the UE conveniently. This also improves flexibility of the UE in making the TCI state list effective, thereby avoiding a performance loss in uplink/downlink data transmission when the network-side device schedules the UE.

### BRIEF DESCRIPTION OF DRAWINGS

FIG. 1 is a schematic diagram of an architecture of a wireless communication system according to an embodiment of this application;
FIG. 2 is a first schematic diagram of a TCI state updating method according to an embodiment of this application;
FIG. 3 is a second schematic diagram of a TCI state updating method according to an embodiment of this application;
FIG. 4 is a third schematic diagram of a TCI state updating method according to an embodiment of this application;
FIG. 5 is a fourth schematic diagram of a TCI state updating method according to an embodiment of this application;
FIG. 6 is a schematic flowchart of a TCI state updating method according to an embodiment of this application;
FIG. 7 is a fifth schematic diagram of a TCI state updating method according to an embodiment of this application;
FIG. 8 is a first schematic diagram of a structure of a TCI state updating apparatus according to an embodiment of this application;
FIG. 9 is a second schematic diagram of a structure of a TCI state updating apparatus according to an embodiment of this application;
FIG. 10 is a schematic diagram of a hardware structure of a communication device according to an embodiment of this application;
FIG. 11 is a schematic diagram of a hardware structure of UE according to an embodiment of this application; and
FIG. 12 is a schematic diagram of a hardware structure of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

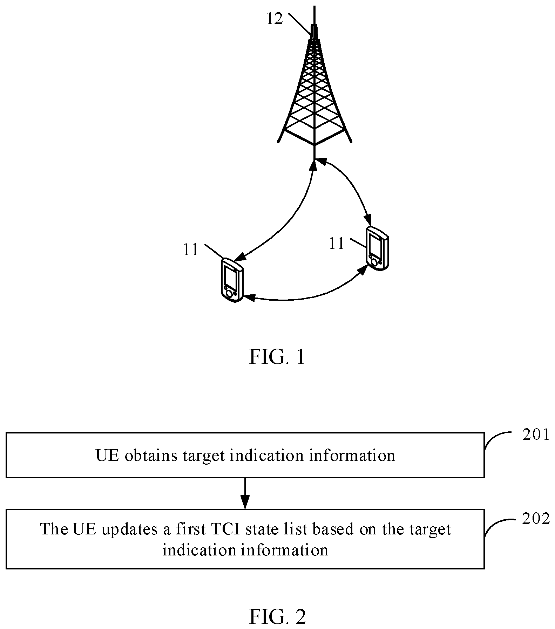

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device 12 may also be referred to as a radio access network device, a radio access network (Radio Access Network, RAN), a radio access network function, or a radio access network element. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

The following describes some concepts and/or terms related to a TCI state updating method and apparatus, a communication device, a system, and a storage medium provided in the embodiments of this application.

Carrier aggregation (Carrier Aggregation, CA): The most direct way to meet requirements for increasing a single-user peak rate and a capacity of a system is to increase a transmission bandwidth of the system. Therefore, CA, a technology for increasing the transmission bandwidth, is introduced. The CA technology can aggregate two to five LTE component carriers (Component Carrier, CC) to achieve a maximum transmission bandwidth of 100 MHz and effectively increase uplink and downlink transmission rates. A CA function can support contiguous or non-contiguous carrier aggregation, and maximum available resources per carrier are 110 RBs. Each user uses a separate hybrid automatic repeat request (Hybrid Automatic Repeat Request, HARQ) entity on each carrier, and each transport block can be mapped only to a specific carrier. A physical downlink control channel (Physical Downlink Control Channel, PDCCH) on each carrier is independent of each other, and the PDCCH on each carrier may be used to allocate a resource to a physical downlink shared channel (Physical Downlink Shared Channel, PDSCH) on the carrier.

A transmission configuration indicator TCI state updating method provided in the embodiments of this application is hereinafter described in detail by using some embodiments and application scenarios thereof with reference to the accompanying drawings.

Currently, for a scenario of a separate (Separate) TCI, an uplink switching time and a downlink switching time may be different, that is, an effective time of an uplink TCI may be separate from an effective time of a downlink TCI. Even for a joint TCI, an effective time on an uplink may also be separate from an effective time on a downlink.

In a TCI updating method, for a TCI indicated by a media access control control element (Media Access Control-Control Element, MAC CE), an effective time is defined for a single-carrier scenario, and can be directly reused in a multi-carrier scenario or a scenario in which each carrier has a separate TCI configuration. A specific channel on each carrier, such as a PDSCH, a PDCCH, or a physical uplink shared channel (Physical Uplink Shared Channel, PUSCH), may have a separate TCI or beam relation (Spatial Relation, SR) effective time. Therefore, the uplink and downlink are also obviously separate. The existing solution causes the following problems:
1. The effective time on the downlink is completely separate. To be specific, when the downlink TCI takes effect, the uplink TCI may not take effect; or when the downlink TCI takes effect, the uplink may not take effect. Consequently, a time interval of the TCI may be ambiguous for network scheduling, the network or UE is unable to properly identify a reason of a transmission problem, and a further decision of the network is affected.
2. When the UE performs uplink TCI switching or downlink TCI switching, the switching is also limited by a margin of a TCI switching time. Consequently, unified switching cannot be completed. For example, a switching time of an uplink beam is earlier than a switching time of a downlink beam, resulting in inconsistent uplink and downlink beams of the UE, and affecting transmission performance.
3. It is difficult to extend the effective time in the prior art to the multi-carrier (carrier aggregation) scenario.

In the embodiments of this application, UE may update a first TCI state list based on target indication information, where the updated first TCI state list takes effect after a first slot, and the first slot is determined based on duration required by an updating process of the first TCI state list. In this solution, after updating the first TCI state list, the UE may determine an effective time of the updated first TCI state list based on the duration required by the updating process of the first TCI state list, that is, the effective time of the TCI can be flexibly determined based on the duration required by the updating process of the first TCI state list, so that a network-side device schedules the UE conveniently. This also improves flexibility of the UE in making the TCI state list effective, thereby avoiding a performance loss in uplink/downlink data transmission when the network-side device schedules the UE.

An embodiment of this application provides a TCI state updating method. FIG. 2 is a flowchart of a transmission configuration indicator TCI state updating method according to an embodiment of this application. As shown in FIG. 2, the transmission configuration indicator TCI state updating method provided in this embodiment of this application may include the following step 201 and step 202.

Step 201: UE obtains target indication information.

In this embodiment of this application, the target indication information is used to indicate that the UE is to update a first TCI state list (that is, a MAC-CE list), and the first TCI state list includes at least one TCI state.

Optionally, in this embodiment of this application, the target indication information is configured by a network-side device.

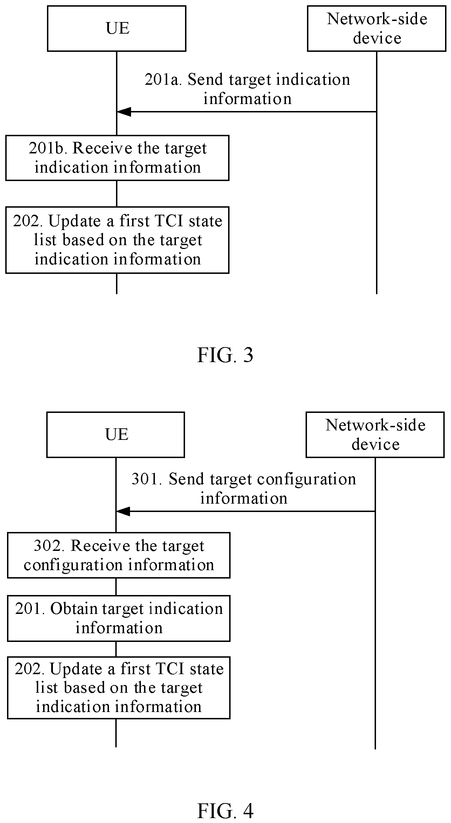

Optionally, in this embodiment of this application, with reference to FIG. 2, as shown in FIG. 3, the foregoing step 201 may be specifically implemented by the following step 201a and step 201b.

Step 201a: The network-side device sends the target indication information to the UE.

Step 201b: The UE receives the target indication information sent by the network-side device.

Optionally, in this embodiment of this application, the foregoing step 201a may be specifically implemented by the following step 201a1, and the foregoing step 201b may be specifically implemented by the following step 201b1.

Step 201a1: The network-side device sends MAC CE signaling to the UE.

In this embodiment of this application, the MAC CE signaling includes the target indication information.

Step 201b1: The UE receives the MAC CE signaling sent by the network-side device.

Optionally, in this embodiment of this application, with reference to FIG. 2, as shown in FIG. 4, before the foregoing step 201, the transmission configuration indicator TCI state updating method provided in this embodiment of this application further includes the following step 301 and step 302.

Step 301: The network-side device sends target configuration information to the UE.

In this embodiment of this application, the target configuration information is used to configure a second TCI state list and a reference signal set for the UE, and a TCI in the second TCI state list is used to indicate source reference signal information in at least one quasi-co-location (Quasi-co-location, QCL).

Step 302: The UE receives the target configuration information sent by the network-side device.

Optionally, in this embodiment of this application, the network-side device may configure one second TCI state list (RRC list) by using radio resource control (Radio Resource Control, RRC) signaling, where each TCI state indicates source reference signal information in one or two QCL relationships or uplink beam relationships; and the TCI state list includes an uplink TCI and a downlink TCI, or includes a joint TCI. The second TCI state list includes at least two TCI states. A universal set of TCI states in the first TCI state list is a subset of a universal set of TCI states in the second TCI state list.

It should be noted that both the uplink TCI and the downlink TCI are separate TCIs. A joint TCI and a separate TCI are not configured for the UE together through RRC.

Optionally, in this embodiment of this application, the network-side device may configure a group of reference signals (Reference Signal, RS), and further configure a QCL relationship between the reference signals based on the configured second TCI state list. In a plurality of reference signal configurations, there is a reference signal used to determine a downlink path loss to calculate uplink transmit power, that is, a path loss reference signal (Path Loss Reference Signal, PL-RS). This type of reference signal may be associated with an uplink TCI or a joint TCI. To be specific, if an uplink TCI or a joint TCI is in an active state, the UE further needs to maintain this PL-RS, and when an activated uplink TCI list changes, a corresponding path loss reference signal also changes accordingly.

Optionally, in this embodiment of this application, after receiving a MAC CE, the UE may first demodulate a corresponding PDSCH, and after a physical layer feeds back an acknowledgement (Acknowledgement, ACK) or negative acknowledgement (Negative acknowledgement, NACK) based on a check status of cyclic redundancy check (Cyclic Redundancy Check, CRC), extract the MAC CE from data delivered from the physical layer to a MAC layer, and perform decoding to obtain the first TCI state list indicated by the MAC CE.

It should be noted that the UE cannot obtain any information of the first TCI state list before completing decoding of the MAC CE. Therefore, the UE can monitor downlink (DL)/uplink (UL) scheduling, transmit uplink/downlink data, and feed back a related ACK/NACK based on an original first TCI state list.

Step 202: The UE updates the first TCI state list based on the target indication information.

In this embodiment of this application, the updated first TCI state list takes effect after a first slot, and the first slot is determined based on duration required by an updating process of the first TCI state list.

Optionally, in this embodiment of this application, the duration required by the updating process of the first TCI state list includes:
(1) Total duration required by a processing procedure associated with updating spatial transmit filter information related to an uplink TCI or a joint TCI. For example, if a reference signal indicated by the spatial transmit filter information related to the uplink TCI (that is, uplink beam information) is still in an unknown state, a target parameter of the reference signal needs to be measured.
(2) Total duration required by a processing procedure associated with updating downlink quasi-co-location related to a downlink TCI or a joint TCI. For example, if a reference signal indicated by a downlink quasi-co-location relationship related to the downlink TCI is still in an unknown state, a target parameter of the reference signal needs to be measured; or if a reference signal indicated by a downlink quasi-co-location relationship related to the downlink TCI is still in an inactive state, it is necessary to first measure and process a synchronization signal block (Synchronization Signal Block, SSB) associated with a reference signal corresponding to the TCI, to obtain related information such as synchronization.
(3) Total duration required by a processing procedure associated with updating a PL-RS list. For example, if an uplink TCI corresponding to a PL-RS is still in an inactive state, it is necessary to measure a reference signal associated with the PL-RS, to obtain a target parameter value and obtain accurate downlink path loss information. It should be noted that if the uplink TCI or the joint TCI is in an unknown state, whether a corresponding TCI state is an active state also needs to be determined.

Optionally, in this embodiment of this application, the first TCI state list includes either of the following: a separate TCI and at least one joint TCI, where the separate TCI includes at least one uplink TCI and at least one downlink TCI, the uplink TCI is used to indicate uplink beam information of uplink transmission, and the downlink TCI is used to indicate downlink QCL information of downlink transmission; and the joint TCI is used to indicate downlink QCL of downlink transmission and uplink beam information of uplink transmission.

Optionally, in this embodiment of this application, the network-side device may deliver a TCI state update indication (that is, the target indication information) by using a MAC CE, where the TCI state update indication includes an uplink TCI and a downlink TCI, or an update of a joint TCI; the uplink TCI may be one or more uplink TCIs, and the downlink TCI may be one or more downlink TCIs; and the joint TCI may be one or more joint TCIs.

It should be noted that because the joint TCI and the separate TCI are not configured for the UE together by using RRC, the joint TCI and the separate TCI cannot be activated simultaneously by using one MAC CE.

Optionally, in this embodiment of this application, the first slot is determined based on a larger one of first duration and second duration, where the first duration is duration required by an updating process of the at least one uplink TCI and the second duration is duration required by an updating process of the at least one downlink TCI.

It may be understood that when the network-side device updates the first TCI state list by using the MAC CE, the UE may update a related parameter indicated by the downlink TCI and a related parameter indicated by the uplink TCI, and the UE may determine an effective time of the new first TCI state list based on a later one of the two, while the UE may determine an update time of the PL-RS based on a state of the uplink TCI.

Optionally, in this embodiment of this application, the first duration is determined based on a state of the at least one uplink TCI, and the second duration is determined based on a state of the at least one downlink TCI, where the state is any one of the following: a known state, an unknown state, an active state, and an inactive state.

In this embodiment of this application, the UE may determine a state (that is, the known state, the unknown state, the active state, or the inactive state) of each TCI based on the currently activated first TCI state list (which has not been updated based on the target indication information in this case) and a measurement result of the reference signal.

Optionally, in this embodiment of this application, based on the measurement result of the reference signal and whether the UE has performed a measurement and reporting of the related reference signal, the UE may determine whether the TCI is in the known state.

It should be noted that the known state of the TCI is defined to avoid a case that the UE does not strictly perform a TCI list configuration and a reference signal configuration, and a beam measurement, but performs a blind configuration based on other information in a process of configuring and activating the TCI by the network-side device. Because the UE has not performed a related measurement and has not obtained synchronization or beam information indicated by the TCI state, an extra time is required before the corresponding TCI state takes effect.

Optionally, in this embodiment of this application, determining, by the UE, whether the TCI is in the active state may be: for a TCI in the known state, determining whether a TCI to be activated is in an activated list; or for a TCI in the unknown state, determining whether a QCL relationship corresponding to a TCI to be activated is related to an SSB.

Optionally, in this embodiment of this application, in a case that an uplink TCI in the unknown state exists in the at least one uplink TCI, the first duration includes duration required by the UE to measure a target parameter of a first reference signal.

In this embodiment of this application, the first reference signal is a reference signal associated with the uplink TCI in the unknown state.

It should be noted that the first reference signal associated with the TCI may be a source reference signal having a QCL relationship or transmit beam information indicated by the TCI, or may be other reference signals having a QCL relationship with a source reference signal. Having a QCL relationship means that a target reference signal having a QCL relationship with the first reference signal is directly the source reference signal having the QCL relationship or transmit beam information indicated by the TCI, or that the first reference signal is in a same QCL relationship chain with the source reference signal having the QCL relationship or transmit beam information indicated by the TCI.

It may be understood that if at least one TCI among a plurality of uplink TCIs is in the unknown state, the first duration needs to include the time required to measure the target parameter of the first reference signal, where the measurement time of the first reference signal is determined based on a period of a periodic signal associated with the uplink TCI in the unknown state or based on a measurement slot of an aperiodic signal associated with the uplink TCI in the unknown state.

It should be noted that if more than one uplink TCI is in the unknown state, the time required to measure the target parameter of the first reference signal is determined based on a measurement opportunity of a reference signal that arrives last among all reference signals associated with the plurality of uplink TCIs in the unknown state.

Optionally, in this embodiment of this application, the target parameter is reference signal received power (Reference Signal Received Power, RSRP), such as layer 1-RSRP (that is, L1-RSRP).

Optionally, in this embodiment of this application, in a case that a downlink TCI in the unknown state exists in the at least one downlink TCI, the second duration includes duration required by the UE to measure a target parameter of a second reference signal.

In this embodiment of this application, the second reference signal is a reference signal associated with the downlink TCI in the unknown state.

It may be understood that if at least one TCI among a plurality of downlink TCIs is in the unknown state, the second duration needs to include the time required to measure the target parameter of the second reference signal, where the measurement time of the second reference signal is determined based on a period of a periodic signal associated with the downlink TCI in the unknown state or based on a measurement slot of an aperiodic signal associated with the downlink TCI in the unknown state.

It should be noted that if more than one downlink TCI is in the unknown state, the time required to measure the target parameter of the second reference signal is determined based on a measurement opportunity of a reference signal that arrives last among all reference signals associated with the plurality of downlink TCIs in the unknown state.

Optionally, in this embodiment of this application, in a case that an uplink TCI in the inactive state exists in the at least one uplink TCI, the first duration includes duration required by the UE to measure an SSB associated with a third reference signal.

In this embodiment of this application, the third reference signal is a reference signal associated with the uplink TCI in the inactive state.

It may be understood that if at least one TCI among a plurality of uplink TCIs is in the inactive state, the first duration needs to include a time for measuring and processing an SSB associated with a reference signal (that is, the third reference signal) corresponding to the at least one TCI in the inactive state. It should be noted that if more than one TCI is in the inactive state, the effective time of the first TCI state list is determined based on a maximum period of the associated SSB.

Optionally, in this embodiment of this application, in a case that a downlink TCI in the inactive state exists in the at least one downlink TCI, the second duration includes duration required by the UE to measure an SSB associated with a fourth reference signal.

In this embodiment of this application, the fourth reference signal is a reference signal associated with the downlink TCI in the inactive state.

It may be understood that if at least one TCI among a plurality of downlink TCIs is in the inactive state, the second duration needs to include a time for measuring and processing an SSB associated with a reference signal (that is, the fourth reference signal) corresponding to the at least one TCI in the inactive state. It should be noted that if more than one TCI is in the inactive state, the effective time of the first TCI state list is determined based on a maximum period of the associated SSB.

Optionally, in this embodiment of this application, the TCI in the first TCI state list is used to indicate at least one of first-type QCL information of the UE on each of N carriers, type-D QCL information on the N carriers, and uplink beam information, where the first-type QCL information includes type-A QCL information, type-B QCL information, and type-C QCL information, and N is an integer greater than or equal to 1.

Optionally, in this embodiment of this application, the first-type QCL information (that is, type-ABC QCL information) is indicated by the TCI in the first TCI state list by using a fifth reference signal on the respective carrier on each carri er.

It should be noted that source reference signals in the type-ABC QCL information are separately configured on each carrier, and that source reference signals in the type-D QCL information and the uplink beam information are configured on only one carrier in a frequency band and can be shared with all other carriers in this frequency band.

In this embodiment of this application, the UE may perform beam measurements based on reference signals configured by the network-side device, and feed back measurement results of target parameters (that is, L1-RSRP) that are obtained through calculation. Specifically, the UE may determine corresponding reference signal configurations based on reporting configurations configured by the network-side device and including target parameters, and perform beam measurements based on the target parameters of the reference signals. In particular, when the UE performs the beam measurements, the UE may determine, based on QCL information of the reference signals, downlink time-frequency synchronization and uplink and downlink beams used when performing the measurements and related periodic reporting.

It should be noted that time-frequency synchronization may include time domain synchronization and frequency domain synchronization, indicated by a type-ABC QCL relationship. The type-ABC QCL relationship is a collective term for type-A, type-B, and type-C QCL relationships. The type-A QCL relationship includes an average delay and delay spread required for time domain synchronization, and a Doppler shift and Doppler spread information required for frequency domain synchronization. The type-B QCL relationship includes only a Doppler shift and Doppler spread information required for frequency domain synchronization. The type-C QCL relationship includes only an average delay and Doppler shift information. The UE may determine time domain synchronization information or frequency domain synchronization information of a target signal or channel based on a source reference signal in each QCL relationship among the type-A, type-B, and type-C QCL relationships.

Downlink beam information is also known as spatial receive filter information or type-D QCL information. After the network-side device indicates downlink beam information, the UE may determine downlink beam information of the target signal or channel based on the source reference signal. Uplink beam information is also known as spatial transmit filter information (Spatial Tx filter) or transmit spatial relation information (Tx Spatial Relation). After the network-side device indicates uplink beam information, the UE may determine uplink beam information of the target signal or channel based on the source reference signal.

Optionally, in this embodiment of this application, the first duration or the second duration is determined based on a state of a TCI in the first TCI state list on each of a plurality of carriers; and the state of the TCI in the first TCI state list on each carrier is determined based on a measurement result of a fifth reference signal on each carrier.

In this embodiment of this application, the UE may determine the effective time of the first TCI state list based on a current state of each TCI in the first TCI state list on each carrier. The UE may determine the state (that is, the known state, the unknown state, the active state, or the inactive state) of each TCI on each carrier based on the currently activated first TCI state list (which has not been updated based on the target indication information in this case) and the measurement result of the reference signal.

In this embodiment of this application, based on the measurement result of the reference signal on each carrier and whether the UE has performed a measurement and reporting of the related reference signal, the UE may determine whether the TCI on each component carrier is in the known state. It should be noted that the reference signal on each carrier is also configured with QCL information. Therefore, the UE needs to refer to the configuration of the QCL information of the reference signal on each carrier when determining whether the TCI on each carrier is in the known state.

It may be understood that in a carrier aggregation scenario, the UE may determine the known state of each TCI on each carrier, and determine the effective time of the entire first TCI state list based on the known state of each TCI on each carri er.

For example, it is assumed that RS 1 and RS 2 are configured on both component carrier (Component Carrier, CC) 1 and CC 2 and are used as type-ABC QCLed source reference signals for TCIs on CC 1 and CC 2. When a known relationship between RS 1 and RS 2 is determined, type-ABC QCLed source reference signals of RS 1 and RS 2 are the same (both RS 3). It should be noted that RS 3 may be on CC 1 or CC 2, or on any CC other than CC 1 and CC 2 in a frequency band. In this case, if RS 3 is an RS that has been measured by the UE and whose RSRP has been reported, and all conditions for determining the known state are met, it may be considered that the TCI is known on both CC 1 and CC 2.

Optionally, in this embodiment of this application, in a case that a TCI whose state on at least one carrier is an unknown state exists in the first TCI state list, the first duration or the second duration includes duration required by the UE to measure a target parameter of a first reference signal group, the first reference signal group is determined based on a second reference signal group, and the second reference signal group includes a sixth reference signal indicated by all TCIs in the first TCI state list on all carriers.

It should be noted that, to describe the known state of the TCI on each CC, in this embodiment of this application, a TCI-CC sequence number pair (a, b) is defined and referred to as a TCI-CC pair for short. The known state on the TCI-CC sequence number pair (a, b) is the known state of a TCI with sequence number a on CCb.

Optionally, in this embodiment of this application, if at least one TCI-CC pair among a plurality of uplink TCIs is in the unknown state, the first duration needs to include the time required to measure the target parameter of the RS, where the measurement time of the RS is determined based on a period of a periodic signal associated with the TCI-CC pair in the unknown state or based on a measurement slot of an aperiodic signal associated with the TCI-CC pair. It should be noted that if more than one TCI-CC pair is in the unknown state, the time required to measure the target parameter of the RS is determined based on a measurement opportunity of an RS that arrives last among all RSs associated with the plurality of TCI-CC pairs.

Optionally, in this embodiment of this application, if at least one TCI-CC pair among a plurality of downlink TCIs is in the unknown state, the second duration needs to include the time required to measure the target parameter of the RS, where the measurement time of the RS is determined based on a period of a periodic signal associated with the TCI-CC pair or based on a measurement slot of an aperiodic signal associated with the TCI-CC pair in the unknown state. It should be noted that if more than one TCI-CC pair is in the unknown state, the time required to measure the target parameter of the RS is determined based on a measurement opportunity of an RS that arrives last among all RSs associated with the plurality of TCI-CC pairs in the unknown state.

Optionally, in this embodiment of this application, if at least one TCI-CC pair among a plurality of uplink TCIs is in the inactive state, the first duration needs to include a time for measuring and processing an SSB associated with an RS corresponding to the TCI-CC pair. It should be noted that if more than one TCI-CC pair is in the inactive state, the effective time of the first TCI state list is determined based on a maximum period of the associated SSB.

Optionally, in this embodiment of this application, if at least one TCI-CC pair among a plurality of downlink TCIs is in the inactive state, the second duration needs to include a time for measuring and processing an SSB associated with an RS corresponding to the TCI-CC pair. It should be noted that if more than one TCI-CC pair is in the inactive state, the effective time of the first TCI state list is determined based on a maximum period of the associated SSB.

In this embodiment of this application, the UE may update at least one uplink TCI and at least one downlink TCI in the first TCI state list based on the target indication information, to ensure that time points for updating the uplink TCI and the downlink TCI are consistent during transmission of the UE. In addition, the UE may determine the effective time of the first TCI state list based on the larger one of the first duration (that is, the duration required by the updating process of at least one uplink TCI) and the second duration (that is, the duration required by the updating process of at least one downlink TCI), so that the effective time of the uplink TCI and the effective time of the downlink TCI can be aligned, so that the network-side device schedules the UE conveniently. This also improves flexibility of the UE in making the first TCI state list effective, thereby avoiding a performance loss in uplink/downlink data transmission when the network-side device schedules the UE.

Optionally, in this embodiment of this application, the first slot is determined based on third duration, and the third duration is duration required by an updating process of the at least one joint TCI.

It may be understood that the network-side device uses a MAC CE to indicate the update of the separate TCI. The UE may determine the known state of the TCI based on a source RS corresponding to each TCI state, and separately determine an update time of related parameters indicated by the downlink TCI and an update time of related parameters indicated by the uplink TCI.

Optionally, in this embodiment of this application, for the separate TCI, after separately determining the first duration corresponding to updating the spatial transmit filter information related to the uplink TCI and the second duration corresponding to updating the downlink quasi-co-location related to the downlink TCI, the UE may determine that an effective time of the separate TCI is the larger one of the first duration and the second duration.

Optionally, in this embodiment of this application, for the joint TCI, after determining the first duration corresponding to updating the spatial transmit filter information related to the uplink TCI and the second duration corresponding to updating the downlink quasi-co-location related to the downlink TCI, the UE may perform determination based on a known state or an active state of a reference signal corresponding to the joint TCI in a unified manner.

Optionally, in this embodiment of this application, the third duration is determined based on a state of the at least one joint TCI, where the state is any one of the following: a known state, an unknown state, an active state, and an inactive state.

Optionally, in this embodiment of this application, in a case that a joint TCI in the unknown state exists in the at least one joint TCI, the third duration includes duration required by the UE to measure a target parameter of a seventh reference signal.

In this embodiment of this application, the seventh reference signal is a reference signal associated with the joint TCI in the unknown state.

It may be understood that if at least one TCI among a plurality of joint TCIs is in the unknown state, the third duration needs to include the time required to measure the target parameter of the RS, where the measurement time of the RS is determined based on a period of a periodic signal associated with the joint TCI in the unknown state or based on a measurement slot of an aperiodic signal associated with the joint TCI in the unknown state. It should be noted that if more than one joint TCI is in the unknown state, the time required to measure the target parameter of the RS is determined based on a measurement opportunity of an RS that arrives last among all RSs associated with the plurality of joint TCIs in the unknown state.

Optionally, in this embodiment of this application, in a case that a joint TCI in the inactive state exists in the at least one joint TCI, the third duration includes duration required by the UE to measure an SSB associated with an eighth reference signal.

In this embodiment of this application, the eighth reference signal is a reference signal associated with the joint TCI in the inactive state.

It may be understood that if at least one TCI among a plurality of joint TCIs is in the inactive state, the third duration needs to include a time for measuring and processing an SSB associated with an RS corresponding to the at least one TCI in the inactive state. It should be noted that if more than one TCI is in the inactive state, an effective time of the joint TCI is determined based on a maximum period of the associated SSB.

Optionally, in this embodiment of this application, the third duration is determined based on a state of a TCI in the first TCI state list on each of a plurality of carriers; and the state of the TCI in the first TCI state list on each carrier is determined based on a measurement result of an eighth reference signal on each carri er.

Optionally, in this embodiment of this application, in a case that a TCI whose state on at least one carrier is an unknown state exists in the first TCI state list, the third duration includes duration required by the UE to measure a target parameter of a first reference signal group, the first reference signal group is determined based on a second reference signal group, and the second reference signal group includes a ninth reference signal indicated by all TCIs in the first TCI state list on all carriers.

Optionally, in this embodiment of this application, if at least one TCI-CC pair among a plurality of joint TCIs is in the unknown state, the third duration needs to include the time required to measure the target parameter of the RS, where the measurement time of the RS is determined based on a period of a periodic signal associated with the TCI-CC pair in the unknown state or based on a measurement slot of an aperiodic signal associated with the TCI-CC pair. It should be noted that if more than one TCI-CC pair is in the unknown state, the time required to measure the target parameter of the RS is determined based on a measurement opportunity of an RS that arrives last among all RSs associated with the plurality of TCI-CC pairs.

Optionally, in this embodiment of this application, if at least one TCI-CC pair among a plurality of joint TCIs is in the inactive state, the third duration needs to include a time for measuring and processing an SSB associated with an RS corresponding to the TCI-CC pair. It should be noted that if more than one TCI-CC pair is in the inactive state, the effective time of the first TCI state list is determined based on a maximum period of the associated SSB.

In this embodiment of this application, in the carrier aggregation scenario, the UE may determine the effective time of the first TCI state list based on the state of each TCI (separate TCI or joint TCI) on each of the plurality of carriers, so that the network-side device schedules the UE conveniently. This also improves flexibility of the UE in making the first TCI state list effective, thereby avoiding a performance loss in uplink/downlink data transmission when the network-side device schedules the UE.

Optionally, in this embodiment of this application, before the foregoing step 201, the transmission configuration indicator TCI state updating method provided in this embodiment of this application further includes the following step 401.

Step 401: The UE determines a maximum value of a quantity of reference signals in the first reference signal group based on first UE capability information.

In this embodiment of this application, in one case, by reporting the first UE capability information, the UE indicates a maximum quantity of beam measurement reference signals that can be simultaneously configured. The network-side device may determine, based on the UE capability information, a maximum quantity of TCIs in the unknown state that can be activated, to avoid a problem of interoperability or a performance loss between the UE and the network-side device because the quantity of TCIs in the unknown state that are activated by the network-side device exceeds the capability of the UE.

In another case, in a multi-carrier scenario, because there are many TCI-CC pairs, a probability of TCI-CC pairs in the unknown state is also high. By reporting the first UE capability information, the UE may indicate a maximum quantity of beam measurement reference signals that can be simultaneously configured. The network-side device may determine, based on the UE capability information, a maximum quantity of TCI-CC pairs in the unknown state that can be activated, to avoid a problem of interoperability or a performance loss between the UE and the network-side device because the quantity of TCI-CC pairs in the unknown state that are activated by the network-side device exceeds the capability of the UE.

Optionally, in this embodiment of this application, the target indication information is further used for the UE to update the PL-RS list, and make the updated PL-RS list effective after a second slot.

Optionally, in this embodiment of this application, after the foregoing step 201, the transmission configuration indicator TCI state updating method provided in this embodiment of this application further includes the following step 501.

Step 501: The UE updates the PL-RS list based on the target indication information.

In this embodiment of this application, the updated PL-RS list takes effect after the second slot.

Optionally, in this embodiment of this application, the UE may determine an effective time of the PL-RS based on the state of the uplink TCI and the state of the downlink TCI; or the UE may determine an effective time of the PL-RS based on the state of the joint TCI.

Optionally, in this embodiment of this application, the UE may update the PL-RS list based on an explicit indication mode of the target indication information, that is, the target indication information is further used to instruct the UE to update the PL-RS list. Alternatively, the UE may update the PL-RS list based on an implicit indication mode of the target indication information, that is, an association relationship is established between a TCI (such as the separate TCI or the joint TCI) in the first TCI state list and the PL-RS, and the update of the first TCI state list may trigger a change of the PL-RS, that is, the network-side device instructs to update the first TCI state list, so that the UE can update the PL-RS list in a case that the first TCI state list is updated.

Optionally, in this embodiment of this application, if at least one TCI among a plurality of uplink TCIs is in the inactive state, when the total duration required by the processing procedure associated with updating the PL-RS list is determined, the total duration needs to include a time for measuring and processing an SSB. It should be noted that if more than one TCI is in the inactive state, an effective time of the PL-RS list, that is, the second slot, is determined based on a maximum period of the associated SSB.

It should be noted that the second slot may be different from the first slot.

Optionally, in this embodiment of this application, if at least one TCI among a plurality of joint TCIs is in the inactive state, when the total duration required by the processing procedure associated with updating the PL-RS list is determined, the total duration needs to include a time for measuring and processing an SSB associated with an RS corresponding to the at least one TCI in the inactive state. It should be noted that if more than one TCI is in the inactive state, an effective time of the PL-RS list is determined based on a maximum period of the associated SSB.

Optionally, in this embodiment of this application, if at least one TCI-CC pair among a plurality of uplink TCIs is in the inactive state, when the total duration required by the processing procedure associated with updating the PL-RS list is determined, the total duration needs to include a time for measuring and processing an SSB. It should be noted that if more than one TCI-CC pair is in the inactive state, an effective time of the PL-RS list is determined based on a maximum period of the associated SSB.

It should be noted that an execution order of step 501 and step 202 is not limited in this application. Step 202 may be performed before step 501 is performed, or step 202 and step 501 may be performed simultaneously.

In the TCI state updating method provided in this embodiment of this application, the UE may update the first TCI state list based on the target indication information, where the updated first TCI state list takes effect after the first slot, and the first slot is determined based on the duration required by the updating process of the first TCI state list. In this solution, after updating the first TCI state list, the UE may determine an effective time of the updated first TCI state list based on the duration required by the updating process of the first TCI state list, that is, the effective time of the TCI can be flexibly determined based on the duration required by the updating process of the first TCI state list, so that the network-side device schedules the UE conveniently. This also improves flexibility of the UE in making the first TCI state list effective, thereby avoiding a performance loss in uplink/downlink data transmission when the network-side device schedules the UE.

Optionally, in this embodiment of this application, after the foregoing step 202, the transmission configuration indicator TCI state updating method provided in this embodiment of this application further includes the following step 601.

Step 601: In a case that the updated first TCI state list has taken effect, the UE uses the updated first TCI state list to transmit target data.

In this embodiment of this application, the target data includes at least one of the following: uplink/downlink scheduling information, uplink data, downlink data, and feedback information.

In this embodiment of this application, in one case, the UE may use, based on the determined duration required by the updating process of the first TCI state list, the updated first TCI state list in the first slot to monitor DL/UL scheduling, transmit uplink/downlink data, and/or feed back related feedback information (such as an ACK/NACK).

In another case, the UE may use, based on the determined duration required by the updating process of the first TCI state list, the updated first TCI state list in the first slot to monitor DL/UL scheduling, transmit uplink/downlink data, and/or feed back related feedback information on one or more CCs.

It should be noted that after the MAC CE decoding is completed and the corresponding first TCI state list is obtained, before the first slot, the UE can also use one or more TCIs in the updated first TCI state list to monitor DL/UL scheduling, transmit uplink/downlink data, and/or feed back a related ACK/NACK.

In this embodiment of this application, the UE may use the updated first TCI state list for data transmission in the first slot, thereby ensuring performance of uplink/downlink data transmission when the network-side device schedules the UE.

An entire process of updating a first TCI state list is hereinafter described in detail by using specific implementations (that is, Implementation 1 and Implementation 2).

Implementation 1: This implementation is a solution for a single-carrier scenario.

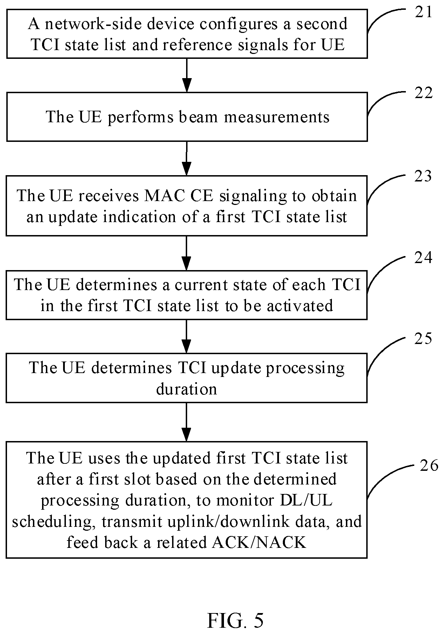

As shown in FIG. 5, a TCI state updating method provided in an embodiment of this application specifically includes the following step 21 to step 26.

Step 21: A network-side device configures a second TCI state list and reference signals for UE.

The network-side device configures one second TCI state list (RRC list) by using RRC signaling, where each TCI state indicates source reference signal information in one or two QCL relationships or QCL information; and the TCI state list includes an uplink TCI, a downlink TCI, or a joint TCI. It should be noted that both the uplink TCI and the downlink TCI are separate TCIs. Aj oint TCI and a separate TCI are not configured for the UE together through RRC.

The network-side device configures a group of reference signals, and further configures a QCL relationship between the reference signals based on the configured TCI state list.

In a plurality of reference signal configurations, there is a reference signal used to determine a downlink path loss to calculate uplink transmit power, that is, a PL-RS. This type of reference signal may be associated with an uplink TCI or a joint TCI. To be specific, if an uplink TCI or a joint TCI is in an active state, the UE further needs to maintain this PL-RS, and when an activated uplink TCI list changes, a corresponding path loss reference signal also changes accordingly.

Step 22: The UE performs beam measurements.

The UE performs the beam measurements based on the reference signals configured by the network-side device, and feeds back L1-RSRP obtained through calculation. Specifically, the UE determines corresponding reference signal configurations based on reporting configurations configured by the network-side device and including L1-RSRP, and performs L1-RSRP beam measurements on the reference signals. In particular, when performing the beam measurements, the UE needs to determine, based on the QCL relationship between the reference signals, downlink time-frequency synchronization and uplink and downlink beams used when performing the measurements and related periodic reporting.

Step 23: The UE receives MAC CE signaling to obtain an update indication of a first TCI state list.

The network-side device delivers the update indication of the first TCI state list (that is, the target indication information described in the foregoing embodiment) by using the MAC CE signaling, where the update indication includes an update indication of the uplink TCI and the downlink TCI, or an update indication of the joint TCI. The uplink TCI may be one or more uplink TCIs and the downlink TCI may be one or more downlink TCIs; and the joint TCI may be one or more joint TCIs. It should be noted that because the joint TCI and the separate TCI are not configured for the UE together by using RRC, the joint TCI and the separate TCI cannot be activated simultaneously by using one MAC CE.

In particular, based on the relationship established between the uplink TCI or joint TCI and the PL-RS in the foregoing step 21, an update of an uplink TCI or joint TCI state list may trigger a change of the PL-RS, that is, the network-side device may implicitly indicate, by changing the TCI state list, that a PL-RS list maintained by the UE needs to be updated.

After receiving the MAC CE signaling, the UE may first demodulate a corresponding PDSCH, and after a physical layer feeds back an ACK or a NACK based on a CRC check status, extract the MAC CE from data delivered from the physical layer to a MAC layer, and perform decoding to obtain a TCI state information list indicated by the MAC CE.

It should be noted that the UE cannot obtain any information of the first TCI state list before completing decoding of the MAC CE. Therefore, the UE needs to monitor DL/UL scheduling, transmit uplink/downlink data, and feed back a related ACK/NACK based on an original first TCI state list.

Step 24: The UE determines a current state of each TCI in the first TCI state list to be activated (to be activated).

In this step, the UE needs to determine the state (1. known state (known or unknown); or 2. active state (active or inactive)) of each TCI based on the currently activated first TCI state list (it should be noted that updating has not been performed based on the information indicated by the MAC CE in this case) and a measurement result of a reference signal mentioned in the foregoing step 22.

Based on the measurement result of the reference signal and whether the UE has performed a measurement and reporting of the related reference signal, the UE may determine whether the TCI is in the known state. The known state of the TCI is defined to cope with a case that the network-side device does not strictly perform the foregoing step 21 and step 22, but performs a blind configuration based on other information in the process of configuring and activating the TCI. Because the UE has not performed a related measurement and has not obtained synchronization or beam information indicated by the TCI state either, an extra time is required before the corresponding TCI state takes effect.

Determining, by the UE, whether the TCI is in the active state is: for a known TCI, determining whether a TCI to be activated is in an activated list; or for an unknown TCI, determining whether a QCL relationship corresponding to a TCI to be activated is related to an SSB.

Step 25: The UE determines TCI update processing duration (duration required by an updating process of the first TCI state list).

Based on the state of each TCI, the UE may further determine:
1. A total time required by a processing procedure associated with updating downlink quasi-co-location related to a downlink TCI or a joint TCI. For example, if an RS indicated by a downlink quasi-co-location relationship related to the downlink TCI is still in the unknown state, RSRP of the RS needs to be measured; or if an RS indicated by a downlink quasi-co-location relationship related to the downlink TCI is still in the inactive state, it is necessary to first measure and process an SSB associated with an RS corresponding to the TCI, to obtain related information such as synchronization.
2. A total time required by a processing procedure associated with updating spatial transmit filter information related to an uplink TCI or a joint TCI. For example, if an RS indicated by an uplink quasi-co-location relationship related to the uplink TCI is still in the unknown state, L1-RSRP of the RS needs to be measured.
3. A total time required by a processing procedure associated with updating a PL-RS maintenance list (that is, a PL-RS list). For example, if an uplink TCI corresponding to a PL-RS is still in the inactive state, it is necessary to measure a reference signal associated with the PL-RS, to obtain an RSRP value and accurate downlink path loss information. It should be noted that if the uplink TCI or the joint TCI is in the unknown state, whether the corresponding TCI state is the active state also needs to be determined, and a determining criterion is determined according to the description in step 24.

Further, for a separate TCI, after a first time corresponding to updating the downlink quasi-co-location related to the downlink TCI and a second time corresponding to updating the spatial transmit filter information related to the uplink TCI are determined separately, it is further determined that an effective time of a separate TCI list is a larger one of the two.

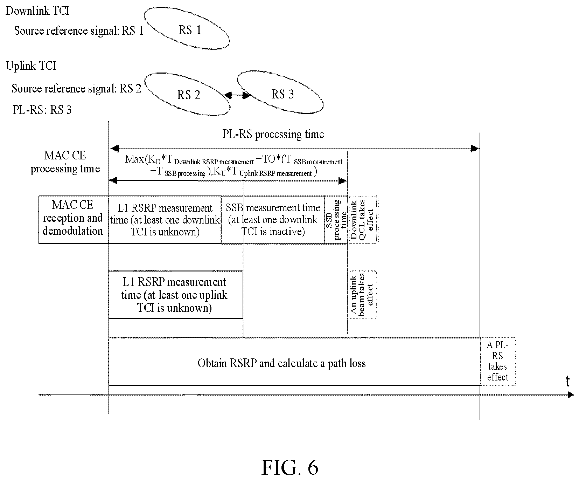

FIG. 6 shows a procedure for TCI state updating. It should be noted that an order of the L1-RSRP measurement and the measurement and processing of the SSB in the process of updating the quasi-co-location relationship of the downlink TCI or joint TCI in FIG. 6 is only an example for description in FIG. 6, and is not limited in this embodiment of this application.

If at least one of a plurality of downlink TCIs is in the unknown state, a time required for measuring RSRP of an RS needs to be included, where the measurement time of the RS is determined based on a period of a periodic signal associated with the unknown downlink TCI or a measurement slot of an aperiodic signal associated with the unknown downlink TCI. If more than one downlink TCI is in the unknown state, a time required for measuring RSRP of an RS is determined based on a measurement opportunity of an RS that arrives last among all RSs associated with the plurality of unknown downlink TCIs.

If at least one of a plurality of uplink TCIs is in the unknown state, a time required for measuring RSRP of an RS needs to be included, where the measurement time of the RS is determined based on a period of a periodic signal associated with the unknown uplink TCI or a measurement slot of an aperiodic signal associated with the unknown uplink TCI. If more than one uplink TCI is in the unknown state, a time required for measuring RSRP of an RS is determined based on a measurement opportunity of an RS that arrives last among all RSs associated with the plurality of unknown uplink TCIs.

If at least one of a plurality of downlink TCIs is in the inactive state, a time for measuring and processing an SSB associated with an RS corresponding to the TCI needs to be included. If more than one TCI is in the inactive state, an effective time of the updated list is determined based on a maximum period of the associated SSB.

If at least one of a plurality of uplink TCIs is in the inactive state, when the total time required by the processing procedure associated with updating the PL-RS maintenance list is determined, the total time needs to include a time for measuring and processing an SSB. If more than one TCI is in the inactive state, an effective time of the PL-RS list is determined based on a maximum period of the associated SSB.

It should be noted that the second slot may be different from the first slot.

Further, for the joint TCI, the downlink quasi-co-location relationship and the uplink spatial transmit filter information are determined in a unified manner based on the known state and active state of a reference signal corresponding to the joint TCI.

If at least one of a plurality of joint TCIs is in the unknown state, a time required for measuring RSRP of an RS needs to be included, where the measurement time of the RS is determined based on a period of a periodic signal associated with the unknown joint TCI or a measurement slot of an aperiodic signal associated with the unknown joint TCI. If more than one joint TCI is in the unknown state, a time required for measuring RSRP of an RS is determined based on a measurement opportunity of an RS that arrives last among all RSs associated with the plurality of unknown joint TCIs.

If at least one of a plurality of joint TCIs is in the inactive state, when an active time of the joint TCI is determined and the total time required by the processing procedure associated with updating the PL-RS maintenance list is determined, the total time needs to include a time required for measuring and processing an SSB associated with an RS corresponding to the TCI. If more than one TCI is in the inactive state, an effective time of the joint TCI list and an effective time of the PL-RS list are determined based on a maximum period of the associated SSB.

By reporting its capability, the UE indicates a quantity of beam measurement reference signals that can be simultaneously configured. The network-side device determines, based on the UE capability, a maximum quantity of unknown TCIs that can be activated. If the quantity of unknown TCIs activated by the network-side device exceeds the UE capability, a corresponding UE behavior is not limited in this embodiment of this application.

Step 26: The UE uses the updated first TCI state list after the first slot based on the determined processing duration (that is, the duration required by the updating process of the first TCI state list), to monitor DL/UL scheduling, transmit uplink/downlink data, and feed back a related ACK/NACK.

It should be noted that after decoding of the MAC CE is completed and the corresponding first TCI state list is obtained, the UE may also use one or more TCIs in the updated first TCI state list before the first slot to monitor DL/UL scheduling, transmit uplink/downlink data, and feed back a related ACK/NACK. This is not limited in this embodiment of this application.

Implementation 2: This implementation is a solution for a multi-carrier scenario, that is, a carrier aggregation scenario.

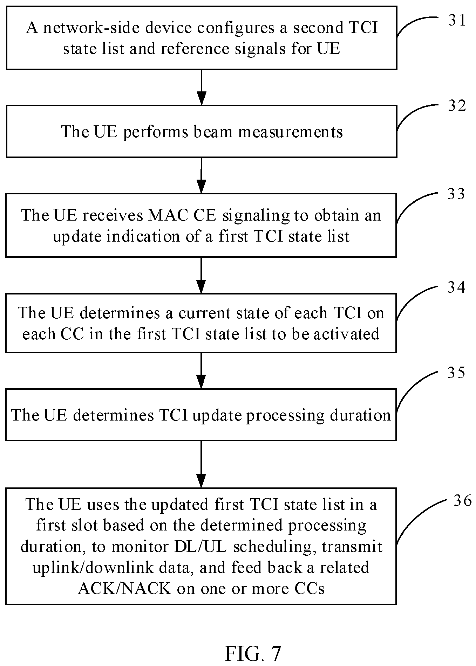

As shown in FIG. 7, a TCI state updating method provided in an embodiment of this application specifically includes the following step 31 to step 36.

Step 31: A network-side device configures a second TCI state list and reference signals for UE.

The network-side device configures one second TCI state list (RRC list) by using RRC signaling, where each TCI state indicates source reference signal information in one or two QCL relationships; and the TCI state list includes an uplink TCI and a downlink TCI, or a joint TCI. pe-ABC QCL relationship means that source reference signals are configured on every CC. A type-D QCL relationship or transmit beam information means that source reference signals are configured on only one of component carriers but are effective on all the CCs. This TCI state configuration is mainly intended for carrier aggregation in a same frequency band (band), that is, an in-band carrier aggregation scenario. A joint TCI and a separate TCI are not configured for the UE together through RRC in the carrier aggregation scenario.

The network-side device configures a group of reference signals, including a PL-RS. The network-side device further configures a QCL relationship between these reference signals based on the configured TCI state list. The PL-RS may be associated with the uplink TCI or the joint TCI, that is, if the uplink TCI or the joint TCI is in an active state, the UE further needs to maintain this PL-RS. A source reference signal on a component carrier corresponding to uplink beam information indicated in the uplink TCI or the joint TCI may be associated with PL-RSs on different CCs respectively.

Step 32: The UE performs beam measurements.

The UE performs the beam measurements based on the reference signals configured by the network-side device, and feeds back L1-RSRP obtained through calculation. Specifically, the UE determines corresponding reference signal configurations based on reporting configurations configured by the network-side device and including L1-RSRP, and performs L1-RSRP beam measurements on the reference signals. In particular, when performing the beam measurements, the UE needs to determine, based on the QCL relationship between the reference signals, downlink time-frequency synchronization and uplink and downlink beams used when performing the measurements and related periodic reporting.

As described in the foregoing step 31, source reference signals in the type-ABC QCL relationship are separately configured on each CC, and source reference signals in the type-D QCL relationship and the uplink beam information are configured on only one carrier in a frequency band and can be shared with all other carriers in this frequency band.

Step 33: The UE receives MAC CE signaling to obtain an update indication of a first TCI state list.

It should be noted that, for the description of step 33, reference may be made to the description in the step 23 in the foregoing embodiment. Details are not described herein again.

Step 34: The UE determines a current state of each TCI on each CC in the first TCI state list to be activated.

In this step, the UE needs to determine the state (1. known state (known or unknown); or 2. active state (active or inactive)) of each TCI on each CC based on the currently activated first TCI state list (it should be noted that updating has not been performed based on the information indicated by the MAC CE in this case) and a measurement result of a reference signal mentioned in the foregoing step 32.

Based on the measurement result of the reference signal on each CC and whether the UE has performed a measurement and reporting of the related reference signal, the UE may determine whether the TCI on each CC is in the known state. It should be noted that according to the description in the foregoing step 32, the reference signal itself on each CC is also configured with a QCL relationship. Therefore, the UE needs to determine, by referring to the QCL relationship configuration of the reference signal on each CC, whether the TCI on each CC is in the known state.

For example, reference signals RS 1 and RS 2 are configured on both CC 1 and CC 2 and are used as type-ABC QCLed source reference signals for TCIs on CC 1 and CC 2. When a known relationship between RS 1 and RS 2 is determined, it is found that type-ABC QCLed source reference signals of RS 1 and RS 2 are the same and are both RS 3. It should be noted that RS 3 may be on CC 1 or CC 2, or on any component carrier other than CC 1 and CC 2 in a frequency band. In this case, if RS 3 has been measured by the UE and RSRP thereof has been reported, and all conditions for determining the known state are met, it may be considered that the TCI is known on both CC 1 and CC 2.

Step 35: The UE determines TCI update processing duration.

Based on the state of each TCI, the UE may further determine:
1. a total time required by a processing procedure associated with updating downlink quasi-co-location related to a downlink TCI or a joint TCI;
2. a total time required by a processing procedure associated with updating spatial transmit filter information related to an uplink TCI or a joint TCI; and
3. a total time required by a processing procedure associated with updating a PL-RS maintenance list.

Further, for a separate TCI, after the time corresponding to updating the downlink quasi-co-location related to the downlink TCI and the time corresponding to updating the spatial transmit filter information related to the uplink TCI are determined separately, it is further determined that an effective time of a separate TCI list is a larger one of the two.

To describe the known state of the TCI on each CC, a TCI-CC sequence number pair (a, b) is defined herein and referred to as a TCI-CC pair for short. The known state on the TCI-CC sequence number pair (a, b) is the known state of a TCI with sequence number a on CC b.

If at least one TCI-CC pair in a plurality of downlink TCIs is in the unknown state, a time required for measuring RSRP of an RS needs to be included, where the measurement time of the RS is determined based on a period of a periodic signal associated with the TCI-CC pair or a measurement slot of an aperiodic signal associated with an unknown downlink TCI on the TCI-CC pair. If more than one TCI-CC pair is in the unknown state, a time required for measuring RSRP of an RS is determined based on a measurement opportunity of an RS that arrives last among all RSs associated with unknown downlink TCIs on the plurality of TCI-CC pairs.

If at least one TCI-CC pair in a plurality of uplink TCIs is in the unknown state, a time required for measuring RSRP of an RS needs to be included, where the measurement time of the RS is determined based on a period of a periodic signal associated with the unknown TCI-CC pair or a measurement slot of an aperiodic signal associated with the TCI-CC pair. If more than one TCI-CC pair is in the unknown state, a time required for measuring RSRP of an RS is determined based on a measurement opportunity of an RS that arrives last among all RSs associated with the plurality of TCI-CC pairs.

If at least one TCI-CC pair in a plurality of downlink TCIs is in the inactive state, a time for measuring and processing an SSB associated with an RS corresponding to the TCI-CC pair needs to be included. If more than one TCI-CC pair is in the inactive state, an effective time of the updated list is determined based on a maximum period of the associated SSB.

If at least one TCI-CC pair in a plurality of uplink TCIs is in the inactive state, when the total time required by the processing procedure associated with updating the PL-RS maintenance list is determined, the total time needs to include a time for measuring and processing an SSB. If more than one TCI-CC pair is in the inactive state, an effective time of the PL-RS list is determined based on a maximum period of the associated SSB.

In a multi-carrier scenario, because there are many TCI-CC pairs, a probability of unknown TCI-CC pairs is also high. By reporting its capability, the UE indicates a quantity of beam measurement reference signals that can be simultaneously configured. The network-side device determines, based on the UE capability, a maximum quantity of unknown TCI-CC pairs that can be activated. If the quantity of unknown TCI-CC pairs activated by the network-side device exceeds the UE capability, a corresponding UE behavior is not limited in this embodiment of this application.

Step 36: The UE uses the updated first TCI state list in a first slot based on the determined processing duration, to monitor DL/UL scheduling, transmit uplink/downlink data, and feed back a related ACK/NACK on one or more CCs.

It should be noted that the TCI state updating method provided in this embodiment of this application may also be performed by a TCI state updating apparatus, or a control module configured to perform the TCI state updating method in the TCI state updating apparatus.

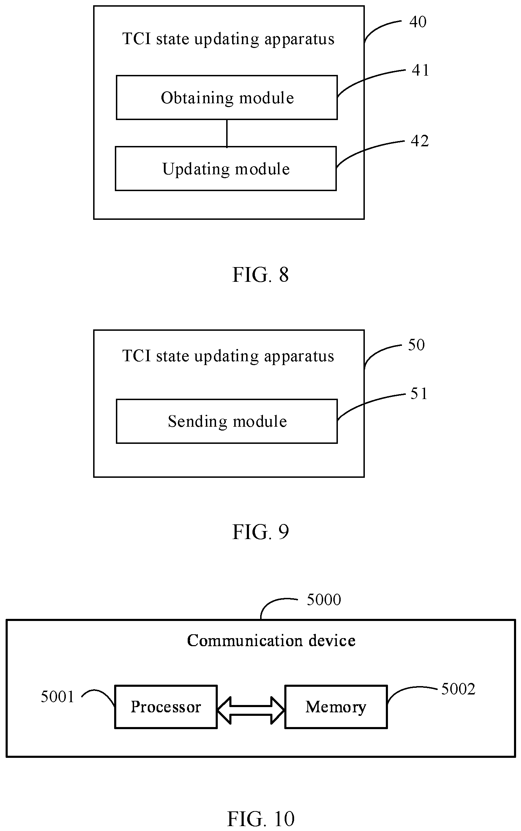

FIG. 8 is a schematic diagram of a possible structure of a TCI state updating apparatus according to an embodiment of this application. As shown in FIG. 8, the TCI state updating apparatus 40 may include an obtaining module 41 and an updating module 42.

The obtaining module 41 is configured to obtain target indication information. The updating module 42 is configured to update a first TCI state list based on the target indication information obtained by the obtaining module 41, where an updated first TCI state list takes effect after a first slot, and the first slot is determined based on duration required by an updating process of the first TCI state list.

In a possible implementation, the first TCI state list includes either of the following: a separate TCI and at least one joint TCI, where the separate TCI includes at least one uplink TCI and at least one downlink TCI, the uplink TCI is used to indicate uplink beam information of uplink transmission, and the downlink TCI is used to indicate downlink QCL information of downlink transmission; and the joint TCI is used to indicate downlink QCL of downlink transmission and uplink beam information of uplink transmission.

In a possible implementation, the first slot is determined based on a larger one of first duration and second duration, where the first duration is duration required by an updating process of the at least one uplink TCI and the second duration is duration required by an updating process of the at least one downlink TCI.

In a possible implementation, the first duration is determined based on a state of the at least one uplink TCI, and the second duration is determined based on a state of the at least one downlink TCI, where the state is any one of the following: a known state, an unknown state, an active state, and an inactive state.

In a possible implementation, in a case that an uplink TCI in the unknown state exists in the at least one uplink TCI, the first duration includes duration required by the UE to measure a target parameter of a first reference signal; or in a case that a downlink TCI in the unknown state exists in the at least one downlink TCI, the second duration includes duration required by the UE to measure a target parameter of a second reference signal, where the first reference signal is a reference signal associated with the uplink TCI in the unknown state, and the second reference signal is a reference signal associated with the downlink TCI in the unknown state.

In a possible implementation, in a case that an uplink TCI in the inactive state exists in the at least one uplink TCI, the first duration includes duration required by the UE to measure an SSB associated with a third reference signal, or in a case that a downlink TCI in the inactive state exists in the at least one downlink TCI, the second duration includes duration required by the UE to measure an SSB associated with a fourth reference signal, where the third reference signal is a reference signal associated with the uplink TCI in the inactive state, and the fourth reference signal is a reference signal associated with the downlink TCI in the inactive state.

In a possible implementation, the first duration or the second duration is determined based on a state of a TCI in the first TCI state list on each of a plurality of carriers; and the state of the TCI in the first TCI state list on each carrier is determined based on a measurement result of a fifth reference signal on each carrier.

In a possible implementation, in a case that a TCI whose state on at least one carrier is an unknown state exists in the first TCI state list, the first duration or the second duration includes duration required by the UE to measure a target parameter of a first reference signal group, the first reference signal group is determined based on a second reference signal group, and the second reference signal group includes a sixth reference signal indicated by all TCIs in the first TCI state list on all carriers.

In a possible implementation, the first slot is determined based on third duration, and the third duration is duration required by an updating process of the at least one joint TCI.

In a possible implementation, the third duration is determined based on a state of the at least one joint TCI, and the state is any one of the following: a known state, an unknown state, an active state, and an inactive state.

In a possible implementation, in a case that a joint TCI in the unknown state exists in the at least one joint TCI, the third duration includes duration required by the UE to measure a target parameter of a seventh reference signal; or in a case that a joint TCI in the inactive state exists in the at least one joint TCI, the third duration includes duration required by the UE to measure an SSB associated with an eighth reference signal, where the seventh reference signal is a reference signal associated with the joint TCI in the unknown state, and the eighth reference signal is a reference signal associated with the joint TCI in the inactive state.

In a possible implementation, the third duration is determined based on a state of a TCI in the first TCI state list on each of a plurality of carriers; and the state of the TCI in the first TCI state list on each carrier is determined based on a measurement result of an eighth reference signal on each carrier.

In a possible implementation, in a case that a TCI whose state on at least one carrier is an unknown state exists in the first TCI state list, the third duration includes duration required by the UE to measure a target parameter of a first reference signal group, the first reference signal group is determined based on a second reference signal group, and the second reference signal group includes a ninth reference signal indicated by all TCIs in the first TCI state list on all carriers.

In a possible implementation, the TCI state updating apparatus provided in this embodiment of this application further includes a determining module. Before the obtaining module 41 obtains the target indication information, the determining module is configured to determine a maximum value of a quantity of reference signals in the first reference signal group based on first UE capability information.

In a possible implementation, the TCI in the first TCI state list is used to indicate at least one of first-type QCL information of the UE on each of N carriers, type-D QCL information on the N carriers, and uplink beam information, where the first-type QCL information includes type-A QCL information, type-B QCL information, and type-C QCL information, and N is an integer greater than or equal to 1.

In a possible implementation, after the obtaining module 41 obtains the target indication information, the updating module 42 is further configured to update a PL-RS list based on the target indication information, where the updated PL-RS list takes effect after a second slot.

In a possible implementation, the obtaining module 41 is specifically configured to receive MAC CE signaling sent by a network-side device, where the MAC CE signaling includes the target indication information.

In a possible implementation, the TCI state updating apparatus provided in this embodiment of this application further includes a receiving module. Before the obtaining module 41 obtains the target indication information, the receiving module is configured to receive target configuration information sent by a network-side device, where the target configuration information is used to configure a second TCI state list and a reference signal set for the UE, and a TCI in the second TCI state list is used to indicate source reference signal information in at least one QCL.

In a possible implementation, the TCI state updating apparatus provided in this embodiment of this application further includes a transmission module. After the updating module 42 updates the first TCI state list based on the target indication information, in a case that the updated first TCI state list has taken effect, the transmission module is configured to use the updated first TCI state list to transmit target data, where the target data includes at least one of the following: uplink/downlink scheduling information, uplink data, downlink data, and feedback information.

This embodiment of this application provides the TCI state updating apparatus. After updating the first TCI state list, the TCI state updating apparatus may determine an effective time of the updated first TCI state list based on the duration required by the updating process of the first TCI state list, that is, the effective time of the TCI can be determined flexibly based on the duration required by the updating process of the first TCI state list, so that the network-side device schedules the UE conveniently. This also improves flexibility of the UE in making the first TCI state list effective, thereby avoiding a performance loss in uplink/downlink data transmission when the network-side device schedules the UE.

The TCI state updating apparatus in this embodiment of this application may be UE, for example, UE with an operating system, or may be a component in UE, for example, an integrated circuit or a chip. The UE may be a terminal, or may be other devices than a terminal. For example, the UE may include but is not limited to the foregoing illustrated type of the UE 11. The other devices may be a server, a network attached storage (Network Attached Storage, NAS), and the like. This is not specifically limited in this embodiment of this application.

The TCI state updating apparatus provided in this embodiment of this application can implement each process implemented by the UE in the foregoing method embodiment, with the same technical effect achieved. To avoid repetition, details are not described herein again.

FIG. 9 is a schematic diagram of a possible structure of a TCI state updating apparatus according to an embodiment of this application. As shown in FIG. 9, the TCI state updating apparatus 50 may include a sending module 51.

The sending module 51 is configured to send target indication information to UE, where the target indication information is used by the UE to update a first TCI state list, the updated first TCI state list takes effect after a first slot, and the first slot is determined based on duration required by an updating process of the first TCI state list.

In a possible implementation, the target indication information is further used by the UE to update a PL-RS list, and the updated PL-RS list takes effect after a second slot.

In a possible implementation, the sending module 51 is specifically configured to send MAC CE signaling to the UE, where the MAC CE signaling includes the target indication information.

In a possible implementation, before sending the target indication information to the UE, the sending module 51 is further configured to send target configuration information to the UE, where the target configuration information is used to configure a second TCI state list and a reference signal set for the UE, and a TCI in the second TCI state list is used to indicate source reference signal information in at least one QCL.

This embodiment of this application provides the TCI state updating apparatus. After updating the first TCI state list, the TCI state updating apparatus may determine an effective time of the updated first TCI state list based on the duration required by the updating process of the first TCI state list, that is, the effective time of the TCI can be determined flexibly based on the duration required by the updating process of the first TCI state list, so that the network-side device schedules the UE conveniently. This also improves flexibility of the UE in making the first TCI state list effective, thereby avoiding a performance loss in uplink/downlink data transmission when the network-side device schedules the UE.

The TCI state updating apparatus provided in this embodiment of this application can implement each process implemented by the network-side device in the foregoing method embodiment, with the same technical effect achieved. To avoid repetition, details are not described herein again.

Optionally, as shown in FIG. 10, an embodiment of this application further provides a communication device 5000, including a processor 5001 and a memory 5002. The memory 5002 stores a program or instructions executable on the processor 5001. For example, when the communication device 5000 is UE, and the program or instructions are executed by the processor 5001, the steps of the foregoing method embodiment on the UE side are implemented, with the same technical effect achieved. When the communication device 5000 is a network-side device, and the program or instructions are executed by the processor 5001, the steps of the foregoing method embodiment of the network-side device are implemented, with the same technical effect achieved. To avoid repetition, details are not described herein again.

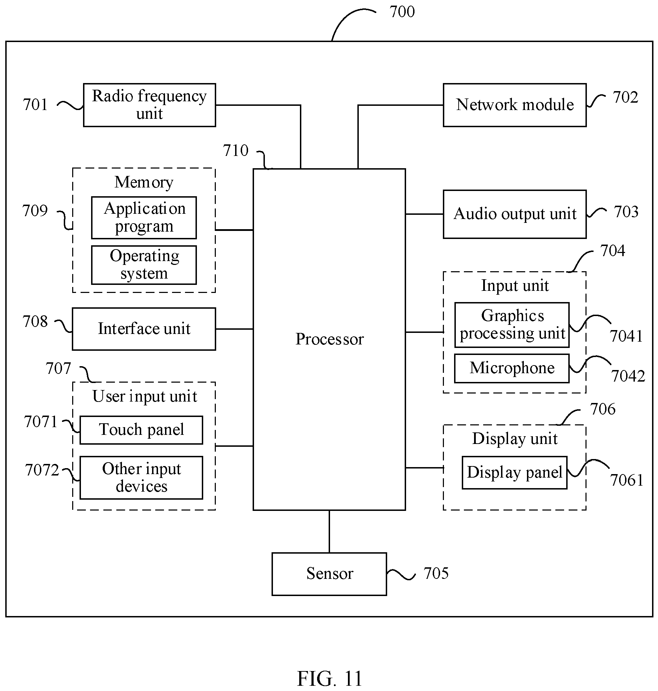

An embodiment of this application further provides UE, including a processor and a communication interface. The processor is configured to obtain, by the UE, target indication information; and update a first TCI state list based on the target indication information, where an updated first TCI state list takes effect after a first slot, and the first slot is determined based on duration required by an updating process of the first TCI state list. The UE embodiment corresponds to the foregoing method embodiment on the UE side, and each implementation process and implementation of the foregoing method embodiment can be applied to the UE embodiment, with the same technical effect achieved. Specifically, FIG. 11 is a schematic diagram of a hardware structure of UE for implementing an embodiment of this application.

The UE 700 includes but is not limited to at least some components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the UE 700 may further include a power supply (for example, a battery) supplying power to all components. Optionally, the power supply may be logically connected to the processor 710 through a power management system. In this way, functions such as charge management, discharge management, and power consumption management are implemented by using the power management system. The structure of the UE shown in FIG. 11 does not constitute a limitation on the UE. The UE may include more or fewer components than those shown in the figure, or some components are combined, or component arrangements are different. Details are not described herein again.

It should be understood that, in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 701 may transmit the downlink data to the processor 710 for processing. In addition, the radio frequency unit 701 may send uplink data to the network-side device. Usually, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may primarily include a first storage area for storing programs or instructions and a second storage area for storing data. The first storage area may store an operating system, an application program or instructions required by at least one function (such as an audio play function and an image play function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 709 in this embodiment of this application includes but is not limited to these and any other suitable types of memories.

The processor 710 may include one or more processing units. Optionally, the processor 710 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively not be integrated in the processor 710.

The processor 710 is configured to obtain, by the UE, target indication information; and update a first TCI state list based on the target indication information, where an updated first TCI state list takes effect after a first slot, and the first slot is determined based on duration required by an updating process of the first TCI state list.

This embodiment of this application provides the UE. The UE may update the first TCI state list based on the target indication information, where the updated first TCI state list takes effect after the first slot, and the first slot is determined based on the duration required by the updating process of the first TCI state list. In this solution, after updating the first TCI state list, the UE may determine an effective time of the updated first TCI state list based on the duration required by the updating process of the first TCI state list, that is, the effective time of the TCI can be flexibly determined based on the duration required by the updating process of the first TCI state list, so that the network-side device schedules the UE conveniently. This also improves flexibility of the UE in making the TCI state list effective, thereby avoiding a performance loss in uplink/downlink data transmission when the network-side device schedules the UE.

The UE provided in this embodiment of this application can implement each process implemented by the UE in the foregoing method embodiment, with the same technical effect achieved. To avoid repetition, details are not described herein again.

An embodiment of this application further provides a network-side device, including a processor and a communication interface. The communication interface is configured to send target indication information to UE, where the target indication information is used by the UE to update a first TCI state list, the updated first TCI state list takes effect after a first slot, and the first slot is determined based on duration required by an updating process of the first TCI state list. The network-side device embodiment corresponds to the foregoing method embodiment of the network-side device, and each implementation process and implementation of the foregoing method embodiment can be applied to the network-side device embodiment, with the same technical effect achieved.

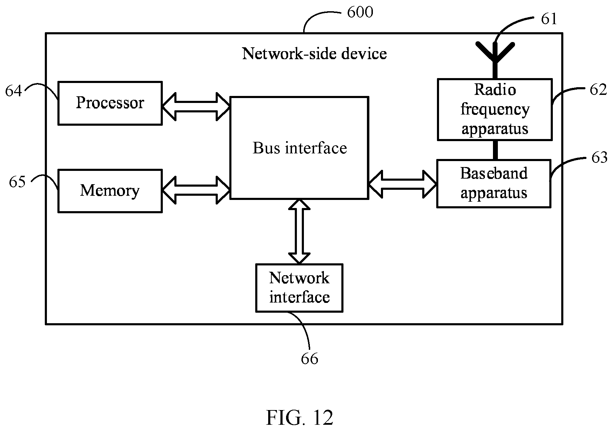

Specifically, an embodiment of this application further provides a network-side device. As shown in FIG. 12, the network-side device 600 includes an antenna 61, a radio frequency apparatus 62, a baseband apparatus 63, a processor 64, and a memory 65. The antenna 61 is connected to the radio frequency apparatus 62. In an uplink direction, the radio frequency apparatus 62 receives information by using the antenna 61, and sends the received information to the baseband apparatus 63 for processing. In a downlink direction, the baseband apparatus 63 processes to-be-sent information, and sends the information to the radio frequency apparatus 62; and the radio frequency apparatus 62 processes the received information and then sends the information out by using the antenna 61.

The method performed by the network-side device in the foregoing embodiment may be implemented in the baseband apparatus 63. The baseband apparatus 63 includes a baseband processor.

The radio frequency apparatus 62 is configured to send target indication information to UE, where the target indication information is used by the UE to update a first TCI state list, the updated first TCI state list takes effect after a first slot, and the first slot is determined based on duration required by an updating process of the first TCI state list.

This embodiment of this application provides the network-side device. The network-side device may update the first TCI state list based on the target indication information, where the updated first TCI state list takes effect after the first slot, and the first slot is determined based on the duration required by the updating process of the first TCI state list. In this solution, after updating the first TCI state list, the network-side device may determine an effective time of the updated first TCI state list based on the duration required by the updating process of the first TCI state list, that is, the effective time of the TCI can be flexibly determined based on the duration required by the updating process of the first TCI state list, so that the network-side device schedules the UE conveniently. This also improves flexibility of the UE in making the TCI state list effective, thereby avoiding a performance loss in uplink/downlink data transmission when the network-side device schedules the UE.

The network-side device provided in this embodiment of this application can implement each process implemented by the network-side device in the foregoing method embodiment, with the same technical effect achieved. To avoid repetition, details are not described herein again.

The baseband apparatus 63 may include, for example, at least one baseband unit, where a plurality of chips are disposed on the baseband unit. As shown in FIG. 12, one of the chips is, for example, the baseband processor, connected to the memory 65 by using a bus interface, to invoke a program in the memory 65 to perform the operation of the network-side device shown in the foregoing method embodiment.

The network-side device may further include a network interface 66, where the interface is, for example, a common public radio interface (common public radio interface, CPRI).

Specifically, the network-side device 600 in this embodiment of this application further includes a program or instructions stored in the memory 65 and executable on the processor 64. When the processor 64 invokes the program or instructions in the memory 65, the method performed by each module shown in FIG. 9 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing method embodiment is implemented, with the same technical effect achieved. To avoid repetition, details are not described herein again.

The processor is a processor in the communication device in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing method embodiment, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing method embodiment, with the same technical effect achieved. To avoid repetition, details are not described herein again.

An embodiment of this application further provides a communication system, including UE and a network-side device. The UE may be configured to perform the steps of the foregoing TCI state updating method. The network-side device may be configured to perform the steps of the foregoing TCI state updating method.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A transmission configuration indicator TCI state updating method, wherein the method comprises:
obtaining, by user equipment UE, target indication information; and
updating, by the UE, a first TCI state list based on the target indication information, wherein an updated first TCI state list takes effect after a first slot, and the first slot is determined based on duration required by an updating process of the first TCI state list.

2. The method according to claim 1, wherein the first TCI state list comprises either of the following: a separate TCI and at least one joint TCI, wherein
the separate TCI comprises at least one uplink TCI and at least one downlink TCI, an uplink TCI is used to indicate uplink beam information of uplink transmission, and an downlink TCI is used to indicate downlink quasi-co-location QCL information of downlink transmission; and
an joint TCI is used to indicate downlink QCL of downlink transmission and uplink beam information of uplink transmission.

3. The method according to claim 2, wherein the first slot is determined based on a larger one of first duration and second duration, wherein the first duration is duration required by an updating process of the at least one uplink TCI and the second duration is duration required by an updating process of the at least one downlink TCI.

4. The method according to claim 3, wherein the first duration is determined based on a state of the at least one uplink TCI, and the second duration is determined based on a state of the at least one downlink TCI, wherein
the state is any one of the following: a known state, an unknown state, an active state, and an inactive state.

5. The method according to claim 4, wherein in a case that an uplink TCI in the unknown state exists in the at least one uplink TCI, the first duration comprises duration required by the UE to measure a target parameter of a first reference signal; or
in a case that a downlink TCI in the unknown state exists in the at least one downlink TCI, the second duration comprises duration required by the UE to measure a target parameter of a second reference signal, wherein
the first reference signal is a reference signal associated with the uplink TCI in the unknown state, and the second reference signal is a reference signal associated with the downlink TCI in the unknown state.

6. The method according to claim 4, wherein
in a case that an uplink TCI in the inactive state exists in the at least one uplink TCI, the first duration comprises duration required by the UE to measure a synchronization signal block SSB associated with a third reference signal, or
in a case that a downlink TCI in the inactive state exists in the at least one downlink TCI, the second duration comprises duration required by the UE to measure an SSB associated with a fourth reference signal, wherein
the third reference signal is a reference signal associated with the uplink TCI in the inactive state, and the fourth reference signal is a reference signal associated with the downlink TCI in the inactive state.

7. The method according to claim 3, wherein the first duration or the second duration is determined based on a state of a TCI in the first TCI state list on each of a plurality of carriers; and
the state of the TCI in the first TCI state list on each carrier is determined based on a measurement result of a fifth reference signal on each carrier.

8. The method according to claim 7, wherein in a case that a TCI whose state on at least one carrier is an unknown state exists in the first TCI state list, the first duration or the second duration comprises duration required by the UE to measure a target parameter of a first reference signal group, the first reference signal group is determined based on a second reference signal group, and the second reference signal group comprises a sixth reference signal indicated by all TCIs in the first TCI state list on all carriers.

9. The method according to claim 2, wherein the first slot is determined based on third duration, and the third duration is duration required by an updating process of the at least one joint TCI.

10. The method according to claim 9, wherein the third duration is determined based on a state of the at least one joint TCI, and the state is any one of the following: a known state, an unknown state, an active state, and an inactive state.

11. The method according to claim 10, wherein in a case that a joint TCI in the unknown state exists in the at least one joint TCI, the third duration comprises duration required by the UE to measure a target parameter of a seventh reference signal; or
in a case that a joint TCI in the inactive state exists in the at least one joint TCI, the third duration comprises duration required by the UE to measure an SSB associated with an eighth reference signal, wherein
the seventh reference signal is a reference signal associated with the joint TCI in the unknown state, and the eighth reference signal is a reference signal associated with the joint TCI in the inactive state.

12. The method according to claim 9, wherein the third duration is determined based on a state of a TCI in the first TCI state list on each of a plurality of carriers; and
the state of the TCI in the first TCI state list on each carrier is determined based on a measurement result of an eighth reference signal on each carrier.

13. The method according to claim 12, wherein in a case that a TCI whose state on at least one carrier is an unknown state exists in the first TCI state list, the third duration comprises duration required by the UE to measure a target parameter of a first reference signal group, the first reference signal group is determined based on a second reference signal group, and the second reference signal group comprises a ninth reference signal indicated by all TCIs in the first TCI state list on all carriers.

14. The method according to claim 8 or 13, wherein before the obtaining, by UE, target indication information, the method further comprises:
determining, by the UE, a maximum value of a quantity of reference signals in the first reference signal group based on first UE capability information.

15. The method according to any one of claims 1 to 13, wherein a TCI in the first TCI state list is used to indicate at least one of first-type QCL information of the UE on each of N carriers, type-D QCL information on the N carriers, and uplink beam information, wherein the first-type QCL information comprises type-A QCL information, type-B QCL information, and type-C QCL information, and N is an integer greater than or equal to 1.

16. The method according to claim 1, wherein after the obtaining, by UE, target indication information, the method further comprises:
updating, by the UE, a path loss reference signal PL-RS list based on the target indication information, wherein an updated PL-RS list takes effect after a second slot.

17. The method according to claim 1 or 16, wherein the obtaining, by UE, target indication information comprises:
receiving, by the UE, media access control control element MAC CE signaling sent by a network-side device, wherein the MAC CE signaling comprises the target indication information.

18. The method according to claim 1 or 16, wherein before the obtaining, by UE, target indication information, the method further comprises:
receiving, by the UE, target configuration information sent by a network-side device, wherein the target configuration information is used to configure a second TCI state list and a reference signal set for the UE, and a TCI in the second TCI state list is used to indicate source reference signal information in at least one QCL.

19. The method according to claim 1 or 16, wherein after the updating, by the UE, a first TCI state list based on the target indication information, the method further comprises:
in a case that the updated first TCI state list has taken effect, transmitting, by the UE, target data by using the updated first TCI state list, wherein the target data comprises at least one of the following: uplink/downlink scheduling information, uplink data, downlink data, and feedback information.

20. A transmission configuration indicator TCI state updating method, wherein the method comprises:
sending, by a network-side device, target indication information to user equipment UE, wherein the target indication information is used by the UE to update a first TCI state list, an updated first TCI state list takes effect after a first slot, and the first slot is determined based on duration required by an updating process of the first TCI state list.

21. The method according to claim 20, wherein the target indication information is further used by the UE to update a path loss reference signal PL-RS list, and an updated PL-RS list takes effect after a second slot.

22. The method according to claim 20 or 21, wherein the sending, by a network-side device, target indication information to UE comprises:
sending, by the network-side device, media access control element MAC CE signaling to the UE, wherein the MAC CE signaling comprises the target indication information.

23. The method according to claim 20 or 21, wherein before the sending, by a network-side device, target indication information to UE, the method further comprises:
sending, by the network-side device, target configuration information to the UE, wherein the target configuration information is used to configure a second TCI state list and a reference signal set for the UE, and a TCI in the second TCI state list is used to indicate source reference signal information in at least one QCL.

24. A transmission configuration indicator TCI state updating apparatus, wherein the apparatus comprises an obtaining module and an updating module, wherein
the obtaining module is configured to obtain target indication information; and
the updating module is configured to update a first TCI state list based on the target indication information obtained by the obtaining module, wherein an updated first TCI state list takes effect after a first slot, and the first slot is determined based on duration required by an updating process of the first TCI state list.

25. A transmission configuration indicator TCI state updating apparatus, wherein the apparatus comprises a sending module, wherein
the sending module is configured to send target indication information to user equipment UE, wherein
the target indication information is used by the UE to update a first TCI state list, an updated first TCI state list takes effect after a first slot, and the first slot is determined based on duration required by an updating process of the first TCI state list.

26. User equipment UE, comprising a processor, a memory, and a program or instructions stored in the memory and executable on the processor, wherein when the program or instructions are executed by the processor, steps of the transmission configuration indicator TCI state updating method according to any one of claims 1 to 19 are implemented.

27. A network-side device, comprising a processor, a memory, and a program or instructions stored in the memory and executable on the processor, wherein when the program or instructions are executed by the processor, steps of the transmission configuration indicator TCI state updating method according to any one of claims 20 to 23 are implemented.

28. A communication system, wherein the communication system comprises the transmission configuration indicator TCI state updating apparatus according to claim 24 and the TCI state updating apparatus according to claim 25; or
the communication system comprises the user equipment UE according to claim 26 and the network-side device according to claim 27.

29. A readable storage medium, wherein the readable storage medium stores a program or instructions, and when the program or instructions are executed by a processor, steps of the transmission configuration indicator TCI state updating method according to any one of claims 1 to 19 are implemented, or steps of the TCI state updating method according to any one of claims 20 to 23 are implemented.

30. A computer program product, wherein the program product is executed by at least one processor to implement the transmission configuration indicator TCI state updating method according to any one of claims 1 to 19 or implement the transmission configuration indicator TCI state updating method according to any one of claims 20 to 23.

31. User equipment UE, wherein the UE is configured or used to perform the transmission configuration indicator TCI state updating method according to any one of claims 1 to 19.
